(19)

Europäisches
Patentamt
European
Patent Office
Office européen
des brevets

(11) **EP 2 821 434 A1**

(12) **EUROPEAN PATENT APPLICATION**

(43) Date of publication:
**07.01.2015 Bulletin 2015/02**

(51) Int Cl.:
***C08L 23/00*** *(2006.01)*     ***B29C 45/00*** *(2006.01)*

(21) Application number: **13175408.7**

(22) Date of filing: **05.07.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Basell Poliolefine Italia S.r.l.
20127 Milano (IT)**

(72) Inventors:
• **Köhler, Rainer
  91257 Pegnitz (DE)**
• **Grazzi, Michele
  44122 Ferrara (IT)**
• **Rohrmann, Jürgen
  65779 Kelkheim (DE)**
• **Pellegatti, Giampaolo
  44122 Ferrara (IT)**

(74) Representative: **Colucci, Giuseppe
  Basell Poliolefine Italia S.r.l.
  Intellectual Property
  Piazzale G. Donegani 12
  44122 Ferrara (IT)**

(54) **Polypropylene compositions containing glass fiber fillers**

(57)     Composition comprising (A) from 30 to 60 by weight, of a soft polyolefin composition comprising, 10-50% by weight of a copolymer (a) of propylene, which copolymer contains from 1 to 8% of comonomer content; 50-90wt% of a copolymer (b) of ethylene and other alpha-olefin(s), containing from 57 to 80% of ethylene; wherein the weight ratio of the content of copolymer component (b) to the fraction XS soluble in xylene at room temperature (about 25 °C), both (b and XS) referred to the total weight of (a) + (b), is of 1.5 or less, and the intrinsic viscosity [η] of the said XS fraction is of 3 dl/g or more; and the total quantity of copolymerized ethylene is preferably from 30% to 65% by weight; (B) from 5 to 30wt% of a glass fiber filler; (C) from 0 to 5 % by weight of a compatibilizer; (D) from 10 to 40 by weight of a polypropylene component selected from propylene homopolymers, propylene copolymers containing up to 5% by moles of ethylene and/or $C_4$-$C_{10}$ α-olefin(s) and combinations of such homopolymers and copolymers, wherein the Melt Flow Rate, of the polypropylene component D) is generally from 0.3 to 2500 g/10 min.

EP 2 821 434 A1

**Description**

The present invention concerns polypropylene compositions containing glass fiber fillers, having an improved balance of mechanical properties.

In particular, the compositions of the present invention have relatively higher stiffness and tensile strength without compromising impact properties or even improving impact at low temperatures, notwithstanding the presence of significant lower amounts of fillers, associated with a very favorable reduction of density.

Typically, 20 up to 80 wt% glassfiber reinforced thermoplastic polyolefin compound for injection moulding exist in the automotive segment designed for aesthetical automotive interior applications. These materials typically target soft touch haptic, a matt surface, a very good sound dampening with a high stiffness and an excellent scratch resistance. Trim components for interior designs, e.g. in cars or airplanes, and external car parts are typical application of such thermoplastics.

US 6441094 discloses impact resistant polyolefin compositions comprising two polymer fractions with different Melt flow rate values (bimodal matrix) and a rubbery phase formed by an elastomeric copolymer of ethylene. The polyolefin composition in US 6441094 present a unique Balance of processability and mechanical and optical properties and they are particularly suitable for injection molding parts.

EP2121829, EP2092004, EP2092015 disclose the use of high melt flow polypropylene polymers also in blend with other thermoplastic, olefin elastomers or plastomers and glass fiber fillers targeting improved balance of processability and mechanical properties. The compositions have relatively high values of Melt Flow Rate, notwithstanding the presence of significant and even very high amounts of fillers and/or pigments. In particular, the compositions of EP2092015 disclose the further addition of elastomeric components including heterophasic thermoplastics.

The Automotive industry imposes increasingly stringent requirements for finished parts.

It would be desirable to devise a new composite material for molded articles retaining or improving the advantages of the prior art blends, notably impact/stiffness balance, without deterioration of their processability and shrinkage. It is highly desirable to obtain particularly formulation with low density thus matching also the light weight requirement.

Accordingly, an object of the present invention is a composition having a Melt Flow Rate, measured according to ISO 1133 with a load of 2.16 kg at 230 °C (hereinafter called also MFR) of from 2 to 100 g/10 min., preferably from 2 to 20 g/10min., comprising:

A) from 30 to 60 by weight, preferably from 40 to 55 of a polyolefin composition comprising, (all percent amounts being by weight):

a) 10-50%, preferably 20-40%, more preferably 25-35%, of a copolymer of propylene with one or more comonomer(s) selected from ethylene and $CH_2=CHR$ alpha-olefins where R is a 2-8 carbon alkyl, which copolymer contains from 1 to 8%, preferably from 1 to 5% of comonomer(s), in particular from 1 to 4.5% when the sole comonomer is ethylene;

b) 50-90%, preferably 60-80%, more preferably 65-75%, of a copolymer of ethylene and (i) propylene or (ii) other $CH_2=CHR$ alpha-olefin(s), where R is a 2-8 carbon alkyl radical, or (iii) a combination thereof, optionally with minor amounts of a diene, containing from 50 to 80%, in particular from 55 to 75% of ethylene;

wherein the weight ratio B/XS of the content B of copolymer component (B) to the fraction XS soluble in xylene at room temperature (about 25 °C), both (B and XS) referred to the total weight of (A) + (B), is of 1.5 or less, preferably of 1.4 or less, in particular of from 1.5 or 1.4 to 0.8, and the intrinsic viscosity [η] of the said XS fraction is of 3 dl/g or more, preferably of from 3.5 to 7 dl/g.

The total quantity of copolymerized ethylene is preferably from 30% to 65% by weight, more preferably from 40% to 60% by weight, in particular from 40% to 55% by weight.

The composition component (A) typically present at least one melt peak, determined by way of DSC, at a temperature higher than 120 °C, but equal to or lower than 150 °C, in particular of from 135 to 148 °C.

B) from 5 to 30wt%, preferably from 10 to 20wt% of a glass fiber filler;

C) from 0 to 5 %, preferably from 0.5 to 3% by weight, of a compatibilizer;

D) from 10 to 40 by weight preferably from 15 to 35 % by weight of a polypropylene component selected from propylene homopolymers, propylene copolymers containing up to 5% by moles of ethylene and/or $C_4$-$C_{10}$ α-olefin(s) and combinations of such homopolymers and copolymers.

The Melt Flow Rate, measured according to ISO 1133 with a load of 2.16 kg at 230 °C of the polypropylene component D) is generally from 0.3 to 2500 g/10 min., preferably from 70 to 2500 g/10 min., more preferably from 500 to 2500 g/10 min., most preferably from 1200 to 2500 g/10 min

Component A) has preferably one or more of the following features are:

- Gloss values equal to or lower than 15%, more preferably equal to or lower than 10%, in particular equal to or lower than 5% (measured at 45° according to ASTM D523 on 1 mm extruded sheets);
- Gloss values equal to or lower than 80%, more preferably equal to or lower than 50%, in particular equal to or lower than 40% (measured at 60° according to ASTM D2457 on injection moulding plaques of 1 mm thickness);
- Shore A values equal to or lower than 90, more preferably from 80 to 90;
- Shore D values equal to or lower than 35, in particular from 35 to 15;
- MFR values, measured according to according to ISO 1133 with a load of 2.16 kg at 230 °C, of from 0.01 to 10 g/10 min., more preferably from 0.05 to 5 g/10 min.;
- Flexural Modulus equal to or lower than 200 MPa, more preferably from 50 to 150 MPa;
- Stress at break: 5-25 MPa;
- elongation at break: higher than 400%;
- substantially no whitening (blush) when bending a plaque 1mm thick;
- amount of fraction soluble in xylene at room temperature (XS) of from 40 to 70% by weight, more preferably from 45 to 65% by weight, referred to the total weight of (A);
- isotacticity index (II) of component (a) equal to or higher than 90%.

The component A) can be produced with polymerization processes carried out in the presence of stereospecific Ziegler-Natta catalysts supported on magnesium dihalides. according to the process and conditions described in WO2007/042375.

Particularly preferred are the compositions having less than 20wt% of component B) having low density, preferably a density of equal to or lower than 1 g/cm$^3$, preferably of from 0.995 to 1.000 g/cm$^3$;

The filler component B) to be used in the compositions of the present invention are fibers made of glass. The glass fibers may be either cut glass fibers or long glass fibers, or may be in the form of continuous filament fibers, although preference is given to using cut glass fibers, also known as short fibers or chopped strands.

In general, the glass fibers can have a length of from 1 to 50 mm.

The cut or short glass fibers used in the compositions of the present invention preferably have a length of from 1 to 6 mm, more preferably from 3 to 4.5 mm, and a diameter of from 10 to 20 $\mu$m, more preferably from 12 to 14 $\mu$m.

As previously said, the polypropylene compositions of the present invention can also comprise a compatibilizer C).

One type which can be used are low molecular weight compounds having reactive polar groups, which serve to make the fillers and pigments less hydrophilic and therefore more compatible with the polymer. Suitable compounds are, for example, silanes such as aminosilanes, epoxysilanes, amidosilanes or acrylosilanes.

However, the compatibilizers preferably comprise a modified (functionalized) polymer and optionally a low molecular weight compound having reactive polar groups. Modified olefin polymers, in particular propylene homopolymers and copolymers, like copolymers of ethylene and propylene with each other or with other alpha olefins, are most preferred, as they are highly compatible with the polymeric component of the compositions of the present invention. Modified polyethylene can be used as well.

In terms of structure, the modified polymers are preferably selected from graft or block copolymers.

In this context, preference is given to modified polymers containing groups deriving from polar compounds, in particular selected from acid anhydrides, carboxylic acids, carboxylic acid derivatives, primary and secondary amines, hydroxyl compounds, oxazoline and epoxides, and also ionic compounds.

Specific examples of the said polar compounds are unsaturated cyclic anhydrides and their aliphatic diesters, and the diacid derivatives. In particular, one can use maleic anhydride and compounds selected from $C_1$-$C_{10}$ linear and branched dialkyl maleates, $C_1$-$C_{10}$ linear and branched dialkyl fumarates, itaconic anhydride, $C_1$-$C_{10}$ linear and branched itaconic acid dialkyl esters, maleic acid, fumaric acid, itaconic acid and mixtures thereof.

Particular preference is given to using a propylene polymer grafted with maleic anhydride as the modified polymer.

The low molecular weight compound serves to couple the filler to the modified polymer and thus to bind it securely to the propylene polymer components. These are usually bifunctional compounds, in which case one functional group can enter into a binding interaction with the filler and the second functional group can enter into a binding interaction with the modified polymer. The low molecular weight compound is preferably an amino- or epoxysilane, more preferably an aminosilane.

The aminosilanes bond with the silane hydroxyl groups to the glass fiber, while the amino groups form a stable amide bond, for example with polypropylene grafted with maleic anhydride.

It is particularly advantageous to apply the low molecular weight compound to the glass fibers before they are incorporated into the composition.

The modified polymer can be produced in a simple manner by reactive extrusion of the polymer, for example with maleic anhydride in the presence of free radical generators (like organic peroxides), as disclosed for instance in EP0572028.

Preferred amounts of groups deriving from polar compounds in the modified polymers are from 0.5 to 3% by weight.

Preferred values of MFR for the modified polymers are from 50 to 400 g/10 min..

It is also possible to use a masterbatch which comprises the fillers and the compatibilizer in premixed form.

Component D) is preferably a high melt flow rate component. The MFR value of D) can result from mixing various propylene homopolymers and/or copolymers with different MFR values.

In such a case the MFR value for D) can be easily determined, on the basis of the amounts and MFR values of the single polymers, by means of the known correlation between the MFR of a polyolefin composition and the MFR of the separate components, which, for instance, in the case of two polymer components $D^1$ and $D^2$, can be expressed as follows:

$$\ln MFR^D = [W_D^1/(W_D^1 + W_D^2)] \times \ln MFR^1 + [W_D^2/(W_D^1 + W_D^2)] \times \ln MFR^2$$

wherein $W_D^1$ and $W_D^2$ represent the weight of components $D^1)$ and $D^2)$ respectively, while $MFR^D$ represent the calculated value of MFR for D) and $MFR^1$ and $MFR^2$ represent the MFR of components $D^1)$ and $D^2)$ respectively.

When combinations (blends) of such propylene homopolymers and/or copolymers are used as polypropylene component D), it can be advantageous to blend at least two homopolymers and/or copolymers with different values of MFR, where the difference is of at least 3 g/10 min., preferably of at least 10 g/10 min.

In particular, and preferably when the MFR of the polypropylene component D) is of less than 500 g/10 min., more preferably from 0.3 to 450 g/10 min., such component D) can comprise two polymer fractions $D^I)$ and $D^{II})$ selected from the said propylene homopolymers and copolymers, wherein fraction $D^{II})$ has a higher MFR value with respect to $D^I)$, with a difference of the said MFR values as above said.

Preferably fraction $D^{II})$ has a MFR value from 500 to 2500 g/10 min., more preferably from 1200 to 2500 g/10 min..

Preferred amounts of such fractions are from 5 to 80% by weight of $D^I)$ and 20 to 95% by weight of $D^{II})$, more preferably from 10 to 70% by weight of $D^I)$ and 30 to 90% by weight of $D^{II})$, all referred to the total weight of D).

Moreover such MFR values are preferably obtained without any degradation treatment. In other words, the polypropylene component D) is preferably made of as-polymerized propylene polymers, not subjected after polymerization to any treatment able to substantially change the MFR value. Thus, also the molecular weights of the polypropylene component D) are substantially those directly obtained in the polymerization process used to prepare the propylene polymers.

Alternatively, but not preferably, the said MFR values are obtained by degradation (visbreaking) of propylene polymers having lower MFR values.

All the MFR values for the polypropylene component D) are measured according to ISO 1133 with a load of 2.16 kg at 230 °C.

The comonomers in the propylene copolymers that can be present in the polypropylene component D) are selected from ethylene and/or $C_4$-$C_{10}$ $\alpha$-olefins, such as for example butene-1, pentene-1, 4-methylpentene-1, hexene-1 and octene-1. The preferred comonomers are ethylene and butene-1.

All the propylene polymers and copolymers of the polypropylene component D) can be prepared by using a Ziegler-Natta catalyst or a metallocene-based catalyst system in the polymerization process.

The said catalysts and the polymerization processes are known in the art. Detailed description of the processes and conditions can be found in WO2010/069998, here incorporated by reference describing processes for component $D^{II}$ and $D^I$.

The polypropylene compositions according to the invention are obtainable by melting and mixing the components , and the mixing is effected in a mixing apparatus at temperatures generally of from 180 to 320°C, preferably from 200 to 280°C, more preferably from 200 to 260°C.

Any known apparatus and technology can be used for this purpose.

Useful mixing apparatus in this context are in particular extruders or kneaders, and particular preference is given to twin-screw extruders. It is also possible to premix the components at room temperature in a mixing apparatus.

Preference is given to initially melting the polymeric components component A) and D) and optionally component C), and subsequently mixing component B) with the melt, in order to reduce the abrasion in the mixing apparatus and the fiber breakage.

During the preparation of the polypropylene compositions of the present invention, besides the main components A) and B) and D) and possibly some compatibilizing agents C), it is possible to introduce additives commonly employed in the art, such as stabilizing agents (against heat, light, U.V.), plasticizers, antistatic and water repellant agents. The amount of such additives (addpack) is typically less than 10wt% with respect to the total weight of the composition.

Due to their favorable balance of properties, the compositions of the present invention can be used in many applications, like injection moulded articles, in particular parts for automotive, electrical appliances, furniture, or formed articles in general, in particular sheets, parts for electrical appliances, furniture, housewares, or as masterbatches.

The following examples are given for illustrating but not limiting purposes.

The following analytical methods are used to determine the properties reported in the description and in the examples.

| | |
|---|---|
| Melt Flow Rate (MFR): | ISO 1133 with a load of 2.16 kg at 230 °C; |
| Intrinsic Viscosity: | Measured in tetrahydronaphthalene at 135° C; |
| Density: | ISO 1183; |
| T-bar preparation (injection moulded): | Test specimens were injection moulded according to Test Method ISO 1873-2 (1989). |
| Flexural Modulus (secant): | ISO 178 on rectangular specimens 80x10x4 mm from T-bars ISO527-1 Type 1A; |
| Tensile Modulus (secant): | ISO 527/-1, -2 on specimens Type 1A with velocity of 1 mm/min, span of 50 mm; |
| Charpy notched: | ISO 179 (type 1, edgewise, Notch A) on rectangular specimens 80x10x4 mm from T-bars ISO527-1 Type 1A; |
| Tensile Strength (stress) at Break: | ISO 527/-1, -2 on specimens Type 1A with velocity of 50 mm/min, span of 50 mm; |
| Elongation (strain) at Break: | ISO 527/-1, -2 on specimens Type 1A with velocity of 50 mm/min, span of 50 mm; |
| HDT (455 kPa): | (heat deflection temperature) ISO 75A -1. -2 on specimens clause 6. |
| HDT (1820 kPa) | (heat deflection temperature) DIN 1820 |

Determination of Isotacticity Index (solubility in xylene at room temperature, in % by weight)

2.5 g of polymer and 250 $cm^3$ of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept for 30 minutes in a bath of ice and water and in thermostatic water bath at 25 °C for 30 minutes as well. The so formed solid is filtered on quick filtering paper. 100 cm3 of the filtered liquid is poured in a previously weighed aluminum container which is heated on a heating plate under nitrogen flow, to remove the solvent by evaporation. The container is then kept in an oven at 80 °C under vacuum until constant weight is obtained. The weight percentage of polymer soluble in xylene at room temperature is then calculated.

The percent by weight of polymer insoluble in xylene at room temperature is considered the isotacticity index of the polymer. This value corresponds substantially to the isotacticity index determined by extraction with boiling n-heptane, which by definition constitutes the isotacticity index of polypropylene.

Xylene soluble (XS) and insoluble fractions

2.5 g of polymer and 250 $cm^3$ of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept for 30 minutes in a bath of ice and water and in thermostatic water bath at 25 °C for 30 minutes as well. The so formed solid is filtered on quick filtering paper. 100 $cm^3$ of the filtered liquid is poured in a previously weighed aluminum container which is heated on a heating plate under nitrogen flow, to remove the solvent by evaporation. The container is then kept in an oven at 80 °C under vacuum until constant weight is obtained. The weight percentage of polymer soluble in xylene at room temperature is then calculated.

The percent by weight of polymer insoluble in xylene at room temperature (25°C) is considered the isotacticity index of the polymer. This value corresponds substantially to the isotacticity index determined by extraction with boiling n-heptane, which by definition constitutes the isotacticity index of polypropylene.

Polydispersity Index (PI)

Accounts for the molecular weight distribution of the polymer. To determine the PI value, the modulus separation at low modulus value, e.g. 500 Pa, is determined at a temperature of 200°C by using a RMS-800 parallel plates rheometer model marketed by Rheometrics (USA), operating at an oscillation frequency which increases from 0.01 rad/second to 100 rad/second. From the modulus separation value, the PI can be derived using the following equation:

$$PI = 54.6 \times (\text{modulus separation}) - 1.76$$

wherein the modulus separation (MS) is defined as:

$$MS = (\text{frequency at } G' = 500\ Pa)/(\text{frequency at } G'' = 500\ Pa)$$

wherein G' is the storage modulus and G" is the low modulus.

Molecular weight distribution (MWD) Determination

The Mn and Mw values are measured by way of gel permeation chromatography (GPC) at 145°C using a Alliance GPCV 2000 instrument (Waters) equipped with three mixed-bed columns TosoHaas TSK GMHXL-HT having a particle size of 13 $\mu$m. The dimensions of the columns are 300 x 7.8 mm. The mobile phase used is vacuum distilled 1,2,4-Trichlorobenzene (TCB) and the flow rate is kept at 1.0 ml/min. The sample solution is prepared by heating the sample under stirring at 145°C in TCB for two hours. The concentration is 1 mg/ml. To prevent degradation, 0.1 g/l of 2,6- diterbutyl-p-cresol are added. 326.5 $\mu$L of solution are injected into the column set. A calibration curve is obtained using 10 polystyrene standard samples (EasiCal kit by Polymer Laboratories) with molecular weights in the range from 580 to 7500000; additionally two other standards with peak molecular weight of 11600000 and 13200000 from the same manufacturer are included. It is assumed that the K values of the Mark-Houwink relationship are:
K = $1.21 \times 10^{-4}$ dL/g and $\alpha$ = 0.706 for the polystyrene standards;
K = $1.90 \times 10^{-4}$ dL/g and $\alpha$ = 0.725 for the polypropylene samples;
K = $1.93 \times 10^{-4}$ dL/g and $\alpha$ = 0.725 for the propylene copolymer samples.
A third order polynomial fit is used for interpolate the experimental data and obtain the calibration curve. Data acquisition and processing is done by using Empower 1.0 with GPCV option by Waters.

Melting temperature (Tm DSC)

Determined by DSC according ISO 3146 with a heating rate of 20K per minute.

MAII (according to ISO 6603)

Shrinkage (according to ISO 2554)

Examples 1, 2 and 3 and Comparative Reference Examples 1 and 2

The following materials are used as components A), B) and C) and D).

Component A)

The solid catalyst component used in the polymerization of component A) are produced and operated likewise in example 1 of WO 2007/042375. The catalyst is a highly stereospecific Ziegler-Natta catalyst component supported on magnesium chloride, containing about 2.2% by weight of titanium and diisobutylphthalate as internal donor, prepared by analogy with the method described in Example 3 of European published patent application 395083. After a prepolymerization stage wherein the catalyst is contacted with aluminum triethyl (TEAL) and dicyclopentyldimethoxysilane (DCPMS) and prepolymerized as described in WO 2007/042375, the catalyst is introduced into a first gas phase polymerization reactor where a propylene copolymer (matrix) is produced.
In a second and eventually a third reactor a propylene/ethylene copolymer (bipo-rubber component(s)) is/are produced. Polymerization conditions, molar ratio of the reactants and composition of the copolymers obtained are shown in Table 1 for component A) HECO-1. The characteristics relating to the polymer compositions, reported in Table 1, are obtained from measurements carried out on the so extruded polymer exiting the reactors. For comparison purposes, Table 1 reports the properties of a polyolefin composition Comparative HECO-2 prepared by sequential polymerization in three stages. HECO2 has been subjected to extrusion/granulation in the presence of 600 ppm by weight of peroxide to reach the final MFR reported in table 1. The peroxide was introduced by using the masterbatch PERGAPROP HX10 PP which contains 10% by weight of liquid peroxide 2,5-Bis(tert-butylperoxy)-2,5-dimethylhexane in a polypropylene carrier.

Table 1

| Component | | | A (comparative) | A | D$^{II}$ | D$^{I}$ (Comparative) | D$^{I}$ |
|---|---|---|---|---|---|---|---|
| | | | HECO2 | HECO1 | PP-1 | HECO3 | PP-2 |
| 1$^{st}$ Reactor operating conditions /matrix properties | | | | | | | |
| Temperature | °C | | 60 | 72 | | | |
| Pressure | barg | | 18 | 18 | | | |
| H2/C3- | mol. | | 0.038 | 0.13 | | | |
| C2-/(C2- + C3-) | mol. | | 0.03 | 0.025 | | | |
| Split | wt% | | 21 | 28.5 | 100 | 55 | 100 |
| C2- content (copolymer) | wt% | | 3.25 | 2.5 | | - | |
| MFR | g/10' | ISO 1133 | 5.5 | 35 | 1800 | 30 | 9.5 |
| Tm DSC | | | 141 | 145 | 153 | 163 | 163 |
| PI | | | 4.5 | 4.5 | | 6 | 4.5 |
| 2$^{nd}$/3rd Reactor operating conditions /bipo-rubber properties | | | | | | | |
| Temperature | °C | | 64/60 | 65 | | | |
| Pressure | barg | | 18 | 16 | | | |
| H2/C2- | mol. | | 0.015/0.009 | 0.06 | | | |
| C2-/(C2- + C3-) | mol. | | 0.16/0.21 | 0.42 | | | |
| Split | wt% | | 49.5/29.5 | 71.5 | | 45 | - |
| C2- content (copolymer) | wt% | | 28/38 | 58 | | 12 | - |
| Final Polymer properties | | | | | | | |
| Tot Comonomer - content | wt% | | 25.7 | 42.2 | | 5.5 | - |
| Xylene Soluble | wt% | | 73 | 57 | | 11 | 3.0 |
| X.S.I.V. | dl/g | | | 4.15 | | 2.7 | |
| Density | | | 0.87 | 0.88 | 0.98 | 0.9 | 0.9 |
| MFRL | g/10' | ISO 1133 | 2.8 | 0.5 | 1800 | 18 | 9.5 |
| Flexural Modulus | MPa | ISO 178 | 35 | 130 | 1350 | 1650 | 1550 |
| Stress at break | MPa | ISO 527 | 7 | 6.97 | | 19 | |
| Elongation/strain at break | % | ISO 527 | 470 | 470 | | 29 | |
| Gloss at 60° | % | ASTM D 2457 | 85 | 36 (4 % - 45°) | | | |
| Shore A | | ISO 868 | 76 | 87 | | | |
| B/XS | | | 1.08 | 1.25 | | | |

Component D)

PP-1: is a very high melt flow polypropylene homopolymers component D$^{II}$ according to the invention. Propylene homopolymer, with MFR of 1800 g/10 min, Mw/Mn of 2.6 and isotacticity index in xylene at room temperature of 98.5% (isotactic pentades (mmmm) higher than 92%), DSC melting temperature of 153 °C, intrinsic viscosity (measured on the polymer as such) of 0.52 dl/g, in form of pellets.

PP-2: is a homopolymer component $D^I$ having MFR of 9.5, isotacticity index in xylene at room temperature of 3%, DSC melting temperature of 163 °C, intrinsic viscosity (measured on the polymer as such) of 1.7 dl/g, in form of flakes.

HECO-3 is a comparative component $D^I$ it is a heterophasic propylene copolymer. HECO-3 is a high crystalline impact copolymer for high stiffness injection moulding applications, having MFR (ISO 1133 - 230°C, 2.16 Kg) of 18 g/10 min; flexural modulus 1650MPa, other properties as reported in table 1

Component B)

GF: Glass fibers White ECS 03T 480 (Nippon Electric Glass Company Ltd), with fiber length of 3 mm and diameter of 13 $\mu$m.

Component C)

PP-MA: Propylene homopolymer grafted with maleic anhydride (MA), with MFR of 430 g/10 min measured according to ISO 1133 with a load of 2.16 kg at 230 °C; and MA level (high) in the range of from 0.5 to 1.0 wt% (Exxelor PO 1020, sold by Exxon)

The compositions contain also conventional additives as indicated in table 1.

The composition are prepared by extrusion, using a twin screw extruder, model Werner&Pfleiderer ZSK40SC.

This line has a process length of approx 48 L/D and is provided with gravimetric feeders. Components A) and C) and D) are fed into the first barrel and component B) is fed into the fourth barrel, via forced side feeding.

A strand die plate with cooling bath and strand cutter Scheer SGS100 is used to form pellets; vacuum degassing (barrel No. 9) is also applied to extract fumes and decomposition products. Running conditions:

| | |
|---|---|
| Screw speed: | 300 rpm; |
| Capacity: | 40-50 kg/h; |
| Barrel Temperature: | 200-240°C. |

The final properties of the so obtained composition are reported in Table 2, together with the relative amounts of the components.

Table 2

| Example | | Reference 1 | 1 | 2 | Reference 2 | 3 |
|---|---|---|---|---|---|---|
| HECO-2 | wt% | 41 | | | 28 | |
| HECO-1 | wt% | | 42 | 42 | | 48 |
| PP-1 | wt% | 16 | 17 | 27 | 15 | 33 |
| HECO-3 | wt% | | | | 38 | |
| Glass Fibres GF | wt% | 25 | 25 | 15 | 12 | 13 |
| PP-MA | wt% | 1 | 1 | 1 | 1 | 1 |
| PP-2 | wt% | 9.5 | 11 | 11 | | |
| Irgafos 168 | wt% | 0.2 | 0.2 | 0.2 | 0.2 | 0.2 |
| Irganox 1076 | wt% | 0.2 | 0.2 | 0.2 | 0.2 | 0.2 |
| Cyasorb UV-3853 S | wt% | 0.1 | 0.1 | 0.1 | 0.2 | 0.1 |
| Zincoxide | wt% | 0.2 | 0.2 | 0.2 | 0.2 | 0.2 |
| Talc HM05 C | wt% | 1 | 1 | 1 | 1 | 1 |

(continued)

| Example | | | Reference 1 | 1 | 2 | Reference 2 | 3 |
|---|---|---|---|---|---|---|---|
| Crodamid ER | wt% | | | 0.15 | 0.15 | | 0.15 |
| MB50-001 (silicone-MB) | wt% | | | | | 1 | |
| Pigments and flakes | wt% | | 5.8 | 2.15 | 2.15 | 3.2 | 3.15 |
| Total addpack wt% | wt% | | 7.5 | 4 | 4 | 6 | 5 |
| Tot composition wt% | wt% | | 100 | 100 | 100 | 100 | 100 |
| HECO-2 (A) comparative | wt% | | 44.3 | 0.0 | 0.0 | 29.8 | 0.0 |
| HECO-1 (A) | wt% | | 0.0 | 43.8 | 43.8 | 0.0 | 50.5 |
| (D$^{II}$) | wt% | | 17.3 | 17.7 | 28.1 | 16.0 | 34.7 |
| (D$^{I}$) comparative | wt% | | 0.0 | 0.0 | 0.0 | 40.4 | 0.0 |
| Glass Fibres (B) | wt% | | 27.0 | 26.0 | 15.6 | 12.8 | 13.7 |
| (C) | wt% | | 1.1 | 1.0 | 1.0 | 1.1 | 1.1 |
| (D$^{I}$) | wt% | | 10.3 | 11.5 | 11.5 | 0.0 | 0.0 |
| Tot wt% recalculated based on the sum of A+B+C+D* | wt% | | 100 | 100 | 100 | 100 | 100 |
| * D= D$^{I}$+D$^{II}$ | | | | | | | |

| | Example | | Ref.1 | 1 | 2 | Ref. 2 | 3 |
|---|---|---|---|---|---|---|---|
| Property | Acc_to | Unit | | | | | |
| density | | | 1.09 | 1.09 | 1.0 | 0.99 | 0.99 |
| MFR (230°C, 2,16 kg) | ISO 1133 | g/10 min | 6.8 | 2.7 | 6.5 | 11.6 | 11.5 |
| HDT A at 1820 kPa | DIN 53461 | °C | 80.5 | 105.2 | 103.7 | 94.9 | 77.6 |
| HDT B at 455 kPa | ISO 75 | °C | 133 | 140.9 | 140.3 | 143.3 | 131.6 |
| Flexural modulus | ISO 178 | MPa | 2384 | 3605 | 2713 | 2260 | 2132 |
| Tensile Chord modulus | ISO 527 | Mpa | 2418 | 3444 | | 2365 | 2102 |
| Impact notched | ISO 179/1eA | kJ/m$^2$ | | | | | |
| at RT | | kJ/m$^2$ | 35.5 | 29.1 | 16.8 | 16.6 | 16.3 |
| at -30°C | | kJ/m$^2$ | 8.6 | 12.6 | 8 | 7.1 | 6 |
| MAII @ RT | ISO 6603 | | | | | | |
| F (max) | | N | 2237 | 1902 | 1498 | 1516 | 1869 |
| E (Fmax) | | J | 8.7 | 5.9 | 5 | 6.8 | 6.4 |
| E ( tot ) | | J | 17.9 | 15 | 11.1 | 10.7 | 12 |
| Kind of breakage on samples | | | 10d | 10 d/b | 10 d/b | 7 d/b 3b | 10 d/b |
| MAII @ -30°C | ISO 6603 | | | | | | |
| F (max) | | N | 1587 | 1703 | 1361 | 1370 | 1108 |
| E (Fmax) | | J | 5.1 | 5.6 | 3.8 | 4.2 | 3.4 |
| E ( tot ) | | J | 5.6 | 6.5 | 4.7 | 4.7 | 4.3 |
| Kind of breakage on samples | | | 10b | 6 b. 4 d/b | 10b | 10b | 10 b |

(continued)

| | Example | | Ref.1 | 1 | 2 | Ref. 2 | 3 |
|---|---|---|---|---|---|---|---|
| Property | Acc_to | Unit | | | | | |
| Shrinkage 48h/RT at 40 bar | ISO 2554 | % | | | | | |
| longitudinal | | % | 0.14 | 0.18 | 0.27 | 0.33 | 0.32 |
| transversal | | % | 0.76 | 0.86 | 0.87 | 0.78 | 0.83 |
| Shrinkage 48h/80°C 40 bar | ISO 2554 | | | | | | |
| longitudinal | | % | 0.05 | 0.07 | 0.09 | 0.09 | 0.07 |
| transversal | | % | 0.11 | 0.07 | 0.1 | 0.1 | 0.13 |

**Claims**

1. Composition having a Melt Flow Rate, measured according to ISO 1133 with a load of 2.16 kg at 230 °C of from 2 to 100 g/10 min. comprising:

   A) from 30 to 60 by weight of a polyolefin composition comprising, (all percent amounts being by weight):

   a) 10-50 % by weight of a copolymer of propylene with one or more comonomer(s) selected from ethylene and $CH_2$=CHR alpha-olefins where R is a 2-8 carbon alkyl, which copolymer contains from 1 to 8% of comonomer(s), in particular from 1 to 4.5% when the sole comonomer is ethylene;
   b) 50-90 wt% of a copolymer of ethylene and (i) propylene or (ii) other $CH_2$=CHR alpha-olefin(s), where R is a 2-8 carbon alkyl radical, or (iii) a combination thereof, optionally with minor amounts of a diene, containing from 50 to 80% of ethylene;
   wherein the weight ratio b/XS of the content b of copolymer component (b) to the fraction XS soluble in xylene at room temperature (about 25 °C), both (b and XS) referred to the total weight of (a) + (b), is of 1.5 or less, and the intrinsic viscosity [$\eta$] of the said XS fraction is of 3 dl/g or more; and the total quantity of copolymerized ethylene is preferably from 30% to 65% by weight;

   B) from 5 to 30 wt% of a glass fiber filler;
   C) from 0 to 5 % by weight of a compatibilizer;
   D) from 10 to 40 by weight of a polypropylene component selected from propylene homopolymers, propylene copolymers containing up to 5% by moles of ethylene and/or $C_4$-$C_{10}$ $\alpha$-olefin(s) and combinations of such homopolymers and copolymers, wherein the Melt Flow Rate, measured according to ISO 1133 with a load of 2.16 kg at 230 °C of the polypropylene component D) is generally from 0.3 to 2500 g/10 min.

2. injection molded, extrusion or thermoformed articles comprising the compositions of claim 1.

3. Use of the compositions of claim 1 as concentrates.

# EP 2 821 434 A1

**Europäisches Patentamt**
**European Patent Office**
**Office européen des brevets**

## EUROPEAN SEARCH REPORT

Application Number

EP 13 17 5408

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2008/074715 A1 (BASELL POLIOLEFINE SRL [IT]; MASARATI ENRICO [IT]; COSTANTINI ENRICO []) 26 June 2008 (2008-06-26) * page 30 - page 31; claims 1,3,6,8,10,11 * * page 23 - page 24; examples 1-4,8 * | 1-3 | INV. C08L23/00 B29C45/00 |
| A | EP 2 308 923 A (BOREALIS AG [AT]) 13 April 2011 (2011-04-13) * pages 20-21; claims 1-9,11,13-15 * * page 17 - page 18; examples 1-4 * | 1,2 | |
| A | WO 2008/068113 A (BASELL POLIOLEFINE SRL [IT]; GOBERTI PAOLO [IT]; PELLEGATTI GIAMPAOLO) 12 June 2008 (2008-06-12) * page 12 - page 13; claims 1-3,5,9-11 * * page 10 - page 11; example 2 * | 1,2 | |
| A | EP 2 592 111 A (BASELL POLIOLEFINE SRL [IT]) 15 May 2013 (2013-05-15) * page 12; claims 1-2 * * page 11; examples 1-2 * | 1,2 | TECHNICAL FIELDS SEARCHED (IPC) C08L C08K B29C |

The present search report has been drawn up for all claims

| Place of search | Date of completion of the search | Examiner |
|---|---|---|
| Munich | 17 December 2013 | Ritter, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

**ANNEX TO THE EUROPEAN SEARCH REPORT
ON EUROPEAN PATENT APPLICATION NO.**

EP 13 17 5408

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2013

| Patent document cited in search report | | Publication date | Patent family member(s) | | Publication date |
|---|---|---|---|---|---|
| WO 2008074715 | A1 | 26-06-2008 | EP | 2092015 A1 | 26-08-2009 |
| | | | JP | 2010513635 A | 30-04-2010 |
| | | | US | 2010069560 A1 | 18-03-2010 |
| | | | WO | 2008074715 A1 | 26-06-2008 |
| EP 2308923 | A | 13-04-2011 | AU | 2010305546 A1 | 31-05-2012 |
| | | | CN | 102575073 A | 11-07-2012 |
| | | | EP | 2308923 A1 | 13-04-2011 |
| | | | ES | 2385459 T3 | 25-07-2012 |
| | | | KR | 20120062021 A | 13-06-2012 |
| | | | PL | 2308923 T3 | 30-11-2012 |
| | | | SI | 2308923 T1 | 31-08-2012 |
| | | | US | 2012225993 A1 | 06-09-2012 |
| | | | WO | 2011042364 A1 | 14-04-2011 |
| WO 2008068113 | A | 12-06-2008 | EP | 2089470 A1 | 19-08-2009 |
| | | | JP | 5237961 B2 | 17-07-2013 |
| | | | JP | 2010511756 A | 15-04-2010 |
| | | | KR | 20090085676 A | 07-08-2009 |
| | | | US | 2010063207 A1 | 11-03-2010 |
| | | | WO | 2008068113 A1 | 12-06-2008 |
| EP 2592111 | A | 15-05-2013 | EP | 2592111 A1 | 15-05-2013 |
| | | | WO | 2013068273 A1 | 16-05-2013 |

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6441094 B
- EP 2121829 A
- EP 2092004 A
- EP 2092015 A
- WO 2007042375 A
- EP 0572028 A
- WO 2010069998 A
- EP 395083 A